# EUROPEAN PATENT SPECIFICATION

(11) **EP 1 290 953 B1**
(45) Date of publication and mention of the grant of the patent: **30.07.2008**
(21) Application number: 01934495.1
(22) Date of filing: 01.06.2001
(51) Int. Cl.: A23L 2/44, A23L 2/84

(54) **PROCESS FOR PRODUCING ACIDIC DRINKS**
VERFAHREN ZUR HERSTELLUNG SAURER GETRÄNKE
PROCEDE DE PRODUCTION DE BOISSONS ACIDES

(30) Priority: 14.06.2000 JP 2000177825
(43) Date of publication of application: 12.03.2003
(73) Proprietor: OTSUKA PHARMACEUTICAL CO., LTD., Chiyoda-ku Tokyo 101-8535 (JP)
(72) Inventor: TAKAICHI, Akihisa, Naruto-shi, Tokushima 772-0051 (JP); OKAMOTO, Toshihiko, Tokushima-shi, Tokushima 779-3122 (JP); WATANABE, Yoshinari, Itano-gun, Tokushima 771-1240 (JP); ITO, Rieko, Itano-gun, Tokushima 771-0203 (JP)
(74) Representative: HOFFMANN EITLE
(86) International application number: PCT/JP2001/004650
(87) International publication number: WO 2001/095747

(56) References cited:
- JP-A- 2000 069 945
- JP-A- 2001 095 543
- E. KOMITOPOULOU ET AL.: "Alicyclobacillus acidoterrestris in fruit juices and its control by nisin" INTERNATIONAL JOURNAL OF FOOD SCIENCE AND TECHNOLOGY., vol. 34, no. 1, 1999, pages 81-85, XP002318777 GBBLACKWELL SCIENTIFIC PUBLICATIONS, OXFORD.
- AKIKO TESAKI ET AL.: 'Budou no koukin kassei seibun no tanri doutei oyobi sono shokuhin e no riyou' NIPPON NOUGYO KAGAKUKAISHI vol. 73, no. 2, CONSECUTIVE NO. 861, February 1999, pages 125 - 128, XP002946216
- PETTIPHER G.L. ET AL.: 'Methods for the detection and enumeration of alicyclobacillus acidoterrestris and investigation of growth and production of taint in fruit juice and fruit juice-containing drinks' LETT. APPL. MICROBIOL. vol. 24, no. 3, 1997, pages 185 - 189, XP002946217
- SILVA F.M. ET AL.: 'Thermal inactivation of alicyclobacillus acidoterrestris spores under different temperature, soluble solids and pH conditions for the design of fruit processes' INT. J. FOOD MICROBIOL. vol. 51, no. 2-3, 1999, pages 95 - 103, XP002946218

## Description

### TECHNICAL FIELD

The present invention relates to an acidic beverage, such as a sports drink and the like, wherein the proliferation of acidophilic bacteria is inhibited, and to a process for producing the same.

### BACKGROUND ART

Fungi (molds) and yeasts capable of growing in acidic environments have been considered as the principal causative microorganisms of deterioration, spoilage or like problems of beverages having an acidic property, such as lactic acid bacteria beverages, sports drinks and the like, since bacteria generally have difficulty growing in such acidic beverages.

However, recently, PET bottles and the like have come into wide use as containers for acidic beverages, and acidic beverages in PET bottles have serious problems of contamination with microorganisms other than the above-mentioned fungi and yeasts. Such a contamination problem seems to be caused by acidophilic bacteria, particularly, thermotolerant acidophilic bacteria belonging to the genus ***Alicyclobacillus.***

No methods have been proposed for solving the contamination problem caused by these acidophilic bacteria.

Furthermore, this contamination problem cannot be sufficiently solved by indirect, conventional methods of controlling beverage products, which were used against common bacteria. Examples of such methods include a method of lowering the storage temperature of the beverage products (cold storage), a method of sterilizing the beverage products at high temperatures (high-temperature sterilization, and the like), and a method of controlling conditions wherein the beverage products may be contaminated with bacteria, such as raw materials, factories and the like (improvement of sanitation, and the like).

JP-A-2000-69945 teaches blending a beverage with an aqueous extract of grape rinds and seeds, the extract having an antibacterial property.

Thus, an object of the present invention is to develop a technique (bacteriostatic technique) for directly inhibiting the proliferation of acidophilic bacteria in beverage products, as a substitute for the indirect, conventional methods.

### DISCLOSURE OF THE INVENTION

The present inventors carried out extensive research to achieve the above object. As a result, the inventors found that an aqueous extract of grape seeds, for example, exhibits an excellent bacteriostatic effect (proliferation-inhibiting effect) against harmful acidophilic bacteria that may contaminate acidic beverages, particularly, acidophilic bacteria belonging to the genus *Alicyclobacillus*, which cannot be completely destroyed under general thermal sterilization conditions. Specific examples of such acidophilic bacteria include *Alicyclobacillus acidocaldarius, Alicyclobacillus acidoterrestris* and *Alicyclobacillus cycloheptanicus*. The present inventors also found that by adding the above-mentioned substance to an acidic beverage, an acidic beverage satisfying the above object is obtained, wherein the proliferation of acidophilic bacteria is inhibited.

The present invention was accomplished based on these findings.

According to a first aspect, the present invention provides a process for producing a bacteriostatic acidic beverage comprising incorporating into the acidic beverage 0.00036 to 0.0073 wt.% of a substance effective for inhibiting the proliferation of thermotolerant acidophilic bacteria belonging to the genus *Alicyclobacillus* capable of proliferating in the acidic beverage, the substance being an aqueous extract of grape seeds and/or an aqueous extract of the pomace or the residues of squeezed grapes after separation of the juice.

Preferably the acidic beverage has a pH of less than 4.6 and is a fruit juice beverage, a lactic beverage, a vegetable juice, a gelled beverage, flavoured water or a sports drink.

According to a second aspect, the present invention provides an acidic beverage obtainable by the process according to the above first aspect in which proliferation of thermotolerant acidophilic bacteria is inhibited.

According to a third aspect, the present invention provides the use of a substance which is an aqueous extract of grape seeds and/or an aqueous extract of the pomace or the residues of squeezed grapes after separation of the juice for inhibiting the proliferation of *Alicyclobacillus* in an acidic beverage, wherein said substance is incorporated into the acidic beverage in an amount of 0.00036 to 0.0073 wit.%.

In the present invention, it is essential to utilize a substance effective for inhibiting the proliferation of acidophilic bacteria capable of proliferating in an acidic beverage, that is, an acidophilic bacteria proliferation inhibitor. The acidophilic bacteria proliferation inhibitor is an aqueous extract of grape seeds and/or an aqueous extract of the pomace or the residue of squeezed grapes after separation of the juice.

These aqueous extracts are obtained by preferably, as pretreatment, contacting grape seeds or the pomace or the residue of squeezed grapes after separation of the juice with water at a temperature of lower than 70°C to remove water-soluble material and then extracting with water at a temperature of 70°C or higher. These aqueous extracts contain proanthocyanidin as one of the main components for inhibiting the proliferation of acidophilic bacteria.

Proanthocyanidins are condensed tannins present in plants. Each of the proanthocyanidins consists of a plurality of compounds having a different molecular weight, the compounds being formed by condensation or polymerization of 2 to 30 monomer units, such as flavan-3-ol and flavan-3,4-diol. The proanthocyanidins yield cyanidin, delphinidin, pelargonidin and like anthocyanidins when treated with an acid. The proanthocyanidins include polymers formed by condensation or polymerization of 2 to 30 of the above-mentioned anthocyanidines (for example, dimers, trimers, tetramers and like polymers, specifically, procyanidin, prodelphinidin, propelargonidin and the like). Moreover, the proanthocyanidins also include stereoisomers thereof. Each of these proanthocyanidins has the desired action of inhibiting the proliferation of acidophilic bacteria. The active component for inhibiting the proliferation of acidophilic bacteria in the acidophilic bacteria proliferation inhibitor of the present invention can be any of the above-mentioned proanthocyanidins.

In the preparation of the above-mentioned preferable acidophilic bacteria proliferation inhibitors, that is, an aqueous extract of grape seeds and an aqueous extract of the pomace or the residue of squeezed grapes after separation of the juice, the grape to be used can be any species, such as a white grape, a red grape, a black grape and the like. There are also no restrictions on the variety of the grape to be used, for example, Chardonnay, Niagara, Neo Muscat, Koshu, Delaware, Muscat Beiley A, Campbell early and the like.

Examples of the pomace or the residue of squeezed grapes after separation of the juice include the pomace or the residue collected after squeezing fruit juice from the above-mentioned grapes for the production of grape juice drinks, wine or the like, that is, the pomace or the residue of squeezed grapes after separation of the juice; and the pomace or the residue of squeezed grapes after separation of the juice obtained by squeezing grapes after a prefermentation process in the production of red wine.

The pomace or the residue of squeezed grapes after separation of the juice generally contain about 50% skin, about 45% seeds and a few percent pedicel, calculated on a dry weight basis. As the above-mentioned pomace or residue of squeezed grapes after separation of the juice to be used in the present invention, the pomace or the residue of squeezed grapes after separation of the juice from white grapes containing no anthocyanine-based red pigments are preferable.

As the grape seeds to be used in the present invention, those obtained from the above-mentioned pomace or residue of squeezed grapes after separation of the juice are preferable. This is because a large amount of grape seeds is contained in the pomace or the residue of squeezed grapes after separation of the juice, as is evident from the fact that the pomace or the residue of squeezed grapes after separation of the juice contain about 45% grape seeds, thus it is easy to obtain the grape seeds from the pomace or the residue of squeezed grapes after separation of the juice. The grape seeds thus obtained also contain a large amount of proanthocyanidins and a small amount of impurities such as sugars and the like.

The grape seeds and the pomace or the residue of squeezed grapes after separation of the grape juice each are subjected to water extraction without being treated, or after being pulverized to a suitable particle size with a cutting mill or the like. Since grape seeds contain oil in its interior, it is preferable to subject them to water extraction without treating them, rather than crushing them into pieces.

The water extraction is carried out at a temperature of 70°C or higher, preferably about 80 to about 120°C, and more preferably about 80 to about 100°C.

There are no restrictions on the amount of water added to the raw material (calculated on a dry weight basis) during water extraction. Generally, 100 g of the raw material is combined with about 200 to about 2,000 ml of water, that is, the amount of water is about 2 to about 20 times (v/w) that of the raw material. Preferably, the amount of water is about 3 to about 10 times (v/w) that of the raw material. In the extraction process, a small amount of a surfactant, such as a sucrose fatty acid ester and the like, can be used as required. When using a surfactant, the amount of surfactant to be used is about 0.01 to about 1.0% (w/v) based on the amount of water.

The extraction time can be selected appropriately so that the extraction amount of proanthocyanidins can reach the maximum. The extraction time is generally from about 10 minutes to about 4 hours, and preferably from about 15 minutes to about 2 hours.

The extraction process can be carried out using any type of extractor, such as a batchwise extractor, a semi-continuous extractor, a continuous extractor and like extractor. Each of the extractors preferably is a sealed device. The sealed extractor can be pressure-resistant as required. The extraction process can be optionally carried out while stirring the contents.

After the above-mentioned extraction process, the desired extract (proanthocyanidin-containing aqueous solution) is obtained by filtration, centrifugation or the like. Moreover, as required, filtration or the like can be carried out using the obtained extract (proanthocyanidin-containing aqueous solution) together with the solution obtained by washing the extraction residue with water.

The extract thus obtained, that is, the proanthocyanidin-containing aqueous solution, can be used as water for extracting another raw material.

The proanthocyanidin-containing aqueous solution thus obtained generally contains about 0.1 to about 5% (w/v) of proanthocyanidin.

In the present invention, the obtained extract can be used as an acidophilic bacteria proliferation inhibitor without being treated, or with being concentrated or dried, as required.

To obtain an acidophilic bacteria proliferation inhibitor containing proanthocyanidin of high purity, it is particularly preferable to adopt an advanced extraction method, purification method or the like as illustrated below.

One example of a preferable mode of advanced extraction comprises the steps of contacting the pomace or the residue of squeezed grapes after separation of the juice, or grape seeds, with low-temperature water as pretreatment, then removing water-soluble material (including impurities, such as sugars, organic acids and the like) by separating liquids from solids, and extracting the residue by the above-mentioned hot-water extraction method.

In the above-mentioned method, the pretreatment of contacting the pomace or the residue of squeezed grapes after separation of the juice, or grape seeds, with water is carried out at a temperature of lower than 70°C, and preferably about 40 to lower than 70°C. The amount of water added to the raw material (calculated on a dry weight basis) in this pretreatment is about 2 to about 20 times (v/w), and preferably about 3 to about 10 times (v/w) that of the raw material. The extraction time is about 5 minutes to about 4 hours, and preferably about 10 minutes to about 2 hours.

After the above-mentioned treatment of contacting the raw material with water, liquids are removed by a solid-liquid separation method, and the obtained residue is washed with a proper amount of water, as required, then the above-mentioned hot-water extraction is performed.

The obtained proanthocyanidin-containing aqueous solution generally contains about 0.1 to about 5% (w/v) of proanthocyanidin, and the purity is about 30 to about 80%.

The above-mentioned extract can be purified by following methods (a) to (c). The following methods make it possible to produce the desired extract containing proanthocyanidin of higher purity.
(a) Treatment with absorbent: a method comprising the absorption of proanthocyanidin with an absorbent, such as a polystyrene-based resin, Sephadex (registered trademark) LH-20 (manufactured by Pharmacia), a polyamide, a reverse-phase silica gel and the like, followed by washing with water and elute with a polar solvent, to separate and collect the desired extract.
(b) Membrane separation method: a method for separating and collecting a fraction having a fractional molecular weight of 500 to 5,000, using a reverse osmotic membrane or ultrafilter membrane (see, for example, Japanese Unexamined Patent Publication No. 267774/1988).
(c) Solvent fractionation method: a method for separating and collecting the desired extract by distributing and extracting with ethyl acetate, dehydrating the ethyl acetate phase, and subjecting the proanthocyanidin-containing components to fractional precipitation with a nonpoler solvent, such as chloroform or the like.

Commercially available products can also be used for the aqueous extract of grape seeds to be used in the present invention. Examples of such commercially available products include "KPA-F" and "Gravinol", each of which is a product of Kikkoman Corp.

In the present invention, a substance effective for inhibiting the proliferation of acidophilic bacteria is generally added to an acidic beverage in an amount of about 0.00036 to about 0.0073 wt.% (for example, corresponding to about 3.7 to about 74 mg/L when an aqueous extract of grape seeds is used), thereby making it possible to exert the desired action of the present invention, that is, the action of inhibiting the proliferation of acidophilic bacteria.

The timing for adding the substance into an acidic beverage is not restricted. It can be added to the acidic beverage during any process, or between processes, in the production of the acidic beverage, or it can be added after the production of the beverage.

Typical examples of acidophilic bacteria whose proliferation is inhibited by the present invention include ***Alicyclobacillus acidocaldarius, Alicyclobacillus acidoterrestris, Alicyclobacillus cycloheptanicus*,** and the like.

In the present invention, the phrase "acidic beverage" includes various beverages having a pH of less than 4.6. Examples of such acidic beverages include fruit juice beverages classified according to the JAS standard, such as natural fruit juices, fruit juices, fruit nectars, fruit juice-containing beverages, berry beverages and the like; lactic beverages (including yogurt and the like) classified according to Notification No. 52 of the Ministry of Welfare, such as milk-based drinks, fermented milk, lactic acid bacteria beverages and the like; vegetable juices; flavored water; sports drinks; and the like. Acidic beverages also include gelled beverages. Gelled beverages denote beverages in a solid or semisolid form wherein the contents are slightly gelated, and the gel can easily disintegrate or separate from water by being shaken at room temperature.

The present invention provides an acidic beverage, wherein the proliferation of acidophilic bacteria is inhibited.

### BEST MODE FOR CARRYING OUT THE INVENTION

Test Examples and Examples are given below to illustrate the present invention in further detail.

### Test Example 1

Test for ascertaining the action of inhibiting the proliferation of acidophilic bacteria of an aqueous extract of grape seeds

### (1) Test acidic beverage

Test solution A and Test solution B, each of which contains components described in Table 1 below, were prepared as test acidic beverages, and used in Test Example 1. Note that the pH and Brix value of each test solution are indicated in Table 1.

**Table 1**

| Test solution | Components | pH | Brix value |
|---|---|---|---|
| Test solution A | Sugar + high fructose corn syrup: 6.2 w/v% Sodium chloride, citric acid, sodium citrate, potassium chloride, sodium L-glutamate, magnesium chloride, vitamin C, flavor: q.s. | 3.5 | 6.7 |
| Test solution B | Fructose + sugar + oligosaccharide: 2.2 w/v% Sodium chloride, citric acid, sodium citrate, potassium chloride, calcium lactate, sodium L-glutamate, magnesium chloride, sweetener, vitamin C, flavor: q.s. | 3.8 | 2.7 |

### (2) Test bacteria

Used as test bacteria, were ***Alicyclobacillus acidocaldarius*** IFO15652 (hereinafter referred to as "Test bacterium a"), ***Alicyclobacillus acidoterrestris*** ATCC49025 (hereinafter referred to as "Test bacterium b") and ***Alicyclobacillus cycloheptanicus*** IFO15310 (hereinafter referred to as "Test bacterium c").

Each test bacterium was inoculated to Test solutions A and B at the following concentrations, respectively.
Test bacterium a: 0.13 cfu/ml
Test bacterium b: 11 cfu/ml
Test bacterium c: 21 cfu/ml

### (3) Substance effective for inhibiting the proliferation of acidophilic bacteria

A preparation containing an aqueous extract of grape seeds, "KPA-F" (product of Kikkoman Corp., consisting of 37 wt.% of a grape seed extract (comprising 40 wt.% of polyphenol and 38 wt.% of proanthocyanidin) and 63 wt.% of dextrin), was used as a commercially available product containing a substance effective for inhibiting the proliferation of acidophilic bacteria.

### (4) Test method

To each of the test acidic beverages inoculated with each test bacterium, KPA-F was added as a preparation in amounts of 10, 15 and 20 ppm (corresponding to 0.00036 wt.%, 0.00054 wt.% and 0.00073 wt.% of an aqueous extract of grape seeds, respectively). Thereafter the solution was stirred and sterilized at 98°C for 30 seconds, and a PET bottle (content: 500 ml) was filled with the solution to prepare a sample solution. As a control, a control solution without the addition of KPA-F was prepared in a similar manner.

### (5) Bacteriostatic test

Each sample solution was stored in an incubator at 50°C for 14 days. The sample solution was taken out of the incubator 3, 7 and 14 days after the beginning of storage, and the number of acidophilic bacteria contained in each sample solution was measured according to the following bacterial test method.

### [Bacterial test method]

Serial dilutions were prepared (for example, 1/10 dilution, 1/100 dilution, and so on) by taking 1 ml of the original sample solution and diluting it with a phosphorous buffer. One ml of each dilution was placed in a sterile petri dish. Then, 15 to 20 ml of a sterile standard agar medium (adjusted to have a pH of 3.6 to 3.8 with citric acid), which was previously molten and kept warm at 45°C or so, was added to the petri dish. After swirling thoroughly to mix the medium and the dilution, the agar medium was solidified. Then, the test bacteria were cultured at 50°C for 5 days while the petri dish was placed upside down, and the number of bacterial colonies formed on the agar medium was counted. The number of bacteria per ml of sample solution was calculated by multiplying this value (the number of bacterial colonies) by the dilution rate.

### (6) Results

The obtained results are shown in Tables 2 and 3 below (Table 2: Test solution A, and Table 3: Test solution B) for each test acidic beverage used in Test Example 1.

**Table 2**

| Test bacterium | Amount of KPA-F preparation | Number of acidophilic bacteria (cfu/ml) | | | |
|---|---|---|---|---|---|
| | | 0 day | 3 days | 7 days | 14 days |
| Test bacterium a | -(No addition) | 0 | 7 | 5.2×10² | - |
| | 10 ppm | 0 | 0 | 0 | 0 |
| | (5 mg/500 ml) | | | | |
| | 15 ppm | 0 | 0 | 0 | 0 |
| | (7.5 mg/500 ml) | | | | |
| | 20 ppm | 0 | 0 | 0 | 0 |
| | (10 mg/500 ml) | | | | |
| Test bacterium b | -(No addition) | 14 | 21 | 30 | 4.5×10² |
| | 10 ppm | 14 | 8 | 4 | 0 |
| | (5 mg/500 ml) | | | | |
| | 15 ppm | 14 | 8 | 4 | 1 |
| | (7.5 mg/500 ml) | | | | |
| | 20 ppm | 14 | 10 | 3 | 1 |
| | (10 mg/500 ml) | | | | |
| Test bacterium c | -(No addition) | 4 | 5.7×10² | >10⁴ | - |
| | 10 ppm | 4 | 3 | 7 | 6 |
| | (5 mg/500 ml) | | | | |
| | 15 ppm | 4 | 0 | 0 | 0 |
| | (7.5 mg/500 ml) | | | | |
| | 20 ppm | 4 | 2 | 1 | 0 |
| | (10 mg/500 ml) | | | | |

**Table 3**

| Test bacterium | Amount of KPA-F preparation | Number of acidophilic bacteria (cfu/ml) | | | |
|---|---|---|---|---|---|
| | | 0 day | 3 days | 7 days | 14 days |
| Test bacterium a | -(No addition) | 0 | 2.8×10⁴ | - | - |
| | 20 ppm | 0 | 0 | 0 | 0 |
| | (10 mg/500 ml) | | | | |
| Test bacterium b | -(No addition) | 11 | 13 | >10⁴ | - |
| | 20 ppm | 11 | 9 | 3 | 1 |
| | (10 mg/500 ml) | | | | |
| Test bacterium c | -(No addition) | 8 | 9.5×10⁴ | - | - |
| | 20 ppm | 8 | 0 | 0 | 0 |
| | (10 mg/500 ml) | | | | |

| | | | | | |
|---|---|---|---|---|---|
| Note that the symbol "-" in each table indicates that the test was not conducted. | | | | | |

The results shown in Table 2 indicate that Test solution A exhibits a bacteriostatic effect against all of the acidophilic bacteria used (three species) by adding 10 ppm or more of KPA-F preparation, that is, 0.00036% or more of the aqueous extract of grape seeds. Further, the results shown in Table 3 reveal that Test solution B exhibits a bacteriostatic effect against all of the acidophilic bacteria used by adding 20 ppm of KPA-F preparation.

### Test Example 2

Test for ascertaining the action of inhibiting the proliferation of acidophilic bacteria of an aqueous extract of grape seeds

### (1) Test acidic beverage and Test bacteria

Test solutions A and B described in Test Example 1 were prepared as test acidic beverages, and used in Test Example 2. Test bacterium a, Test bacterium b and Test bacterium c described in Test Example 1 were used as test bacteria. Note that the concentration of each test bacterium contained in each test solution is as follows: Test bacterium a: 7 cfu/ml, Test bacterium b: 8 cfu/ml, Test bacterium c: 0.12 cfu/ml.

### (2) Substance effective for inhibiting the proliferation of acidophilic bacteria

A commercially available aqueous extract of grape seeds ("Gravinol", product of Kikkoman Corp.) was used as a substance effective for inhibiting the proliferation of acidophilic bacteria.

### (3) Test method

To each of the test acidic beverages inoculated with each test bacterium, a substance effective for inhibiting the proliferation of acidophilic bacteria was added in a predetermined amount. Thereafter, the solution was stirred and sterilized at 98°C for 30 seconds, and a PET bottle (content: 500 ml) was filled with the solution to prepare a sample solution. As a control, a control solution without the addition of the substance effective for inhibiting the proliferation of acidophilic bacteria was prepared in a similar manner.

### (4) Bacteriostatic test

Each sample solution was stored in an incubator at a temperature of 50°C for 1 week. The sample solution was taken out of the incubator 3, 7 and 10 days after the beginning of storage, and the number of acidophilic bacteria contained in each sample solution was measured in a similar manner as in Test Example 1.

### (5) Results

The obtained results are shown in Tables 4 and 5 below (Table 4: Test solution A, and Table 5: Test solution B) for each test acidic beverage used in Test Example 2.

**Table 4**

| Test bacterium | Amount of Gravinol | Number of acidophilic bacteria (cfu/ml) | | | |
|---|---|---|---|---|---|
| | | 0 day | 3 days | 7 days | 10 days |
| Test bacterium a | -(No addition) | 7 | 4 | 2.6×10³ | - |
| | 7.3 ppm | 7 | 2 | 5 | - |
| | (3.7 mg/500 ml) | | | | |
| | 9 ppm | 7 | 4 | 0 | - |
| | (4.6 mg/500 ml) | | | | |
| | 11 ppm | 7 | 6 | 0 | - |
| | (5.5 mg/500 ml) | | | | |
| Test bacterium b | -(No addition) | 8 | 6 | 6 | 5.2×10⁴ |
| | 7.3 ppm | 8 | 8 | 5 | 5 |
| | (3.7 mg/500 ml) | | | | |
| | 9 ppm | 8 | 12 | 4 | 6 |
| | (4.6 mg/500 ml) | | | | |
| | 11 ppm | 8 | 25 | 19 | 15 |
| | (5.5 mg/500 ml) | | | | |
| Test bacterium c | -(No addition) | 0 | 0 | 1.8×10⁵ | - |
| | 7.3 ppm | 0 | 0 | 0 | - |
| | (3.7 mg/500 ml) | | | | |
| | 9 ppm | 0 | 0 | 0 | - |
| | (4.6 mg/500 ml) | | | | |
| | 11 ppm | 0 | 0 | 0 | - |
| | (5.5 mg/500 ml) | | | | |

**Table 5**

| Test bacterium | Amount of Gravinol | Number of acidophilic bacteria (cfu/ml) | | |
|---|---|---|---|---|
| | | 0 day | 3 days | 7 days |
| Test bacterium a | -(No addition) | 4 | 1.1×10² | 2.6×10⁴ |
| | 7.3 ppm | 4 | 4 | 17 |
| | (3.7 mg/500 ml) | | | |
| | 9 ppm | 4 | 3 | 2 |
| | (4.6 mg/500 ml) | | | |
| | 11 ppm | 4 | 3 | 3 |
| | (5.5 mg/500 ml) | | | |
| Test bacterium b | -(No addition) | 6 | 7 | >10⁵ |
| | 7.3 ppm | 6 | 5 | 7 |
| | (3.7 mg/500 ml) | | | |
| | 9 ppm | 6 | 5 | 9 |
| | (4.6 mg/500 ml) | | | |
| | 11 ppm | 6 | 36 | 8 |
| | (5.5 mg/500 ml) | | | |
| Test bacterium c | -(No addition) | 0 | 0 | 2.7×10⁵ |
| | 7.3 ppm | 0 | 0 | 0 |
| | (3.7 mg/500 ml) | | | |
| | 9 ppm | 0 | 0 | 0 |
| | (4.6 mg/500 ml) | | | |
| | 11 ppm | 0 | 0 | 0 |
| | (5.5 mg/500 ml) | | | |

| | | | | |
|---|---|---|---|---|
| Note that the symbol "-" in each table indicates that the test was not conducted. | | | | |

The results shown in Tables 4 and 5 also indicate that a bacteriostatic effect against all of the acidophilic bacteria used (three species) is achieved by adding the substance of the present invention that has an action of inhibiting the proliferation of acidophilic bacteria (in amounts of 0.00073%, 0.0009% and 0.0011%).

### Example 1

### Preparation of acidic beverages

### (1) Preparation of a fruit juice beverage

A 50-w/v%, apple juice-containing beverage was prepared by diluting an undiluted solution by a factor of 4 using, as the raw material, apple juice, sugar and an acidifier, according to a hot-pack method. When mixing the above-mentioned components, an aqueous extract of grape seeds ("Gravinol", product of Kikkoman Corp.) was added to the beverage as a substance effective for inhibiting the proliferation of acidophilic bacteria in such an amount that 0.004 wt.% of the substance was contained in the beverage, thereby producing an acidic beverage of the present invention (pH 4.0).

The obtained beverage had a good taste.

### (2) Preparation of a fruit juice-containing beverage

In a similar manner as in (1) of Example 1, and according to a hot-pack method, a 30-w/v%, Satsuma mandarin orange juice-containing beverage was prepared using, as the raw material, Satsuma mandarin orange juice, fructose, flavor, an acidifier and vitamin C. When mixing the above-mentioned components, an aqueous extract of grape seeds ("Gravinol", product of Kikkoman Corp.) was added to the beverage as a substance effective for inhibiting the proliferation of acidophilic bacteria in such an amount that 0.005 wt.% of the substance was contained in the beverage, thereby producing an acidic beverage of the present invention (pH 4.0).

The obtained beverage had a good taste.

### (3) Preparation of a fruit juice-containing soft drink

In a similar manner as in (1) of Example 1, and according to a hot-pack method, a 20-w/v%, grape juice-containing soft drink was prepared using, as the raw material, grape juice, high fructose corn syrup, and sodium citrate. When mixing the above-mentioned components, an aqueous extract of grape seeds ("Gravinol", product of Kikkoman Corp.) was added to the beverage as a substance effective for inhibiting the proliferation of acidophilic bacteria in such an amount that 0.006 wt.% of the substance was contained in the beverage, thereby producing an acidic beverage of the present invention (pH 4.0).

The obtained beverage had a good taste.

### (4) Preparation of fermented milk

Fermented milk was prepared by dissolving and mixing, as the raw material, milk, sugar, high fructose corn syrup, peach pulp, dairy products, a gelatinizing agent (pectin) and flavor, and then inoculating lactic acid bacteria thereto. When mixing the above-mentioned components, an aqueous extract of grape seeds ("Gravinol", product of Kikkoman Corp.) was added to the fermented milk as a substance effective for inhibiting the proliferation of acidophilic bacteria in such an amount that 0.007 wt.% of the substance was contained in the fermented milk, thereby producing an acidic beverage of the present invention (pH 4.0).

The obtained beverage had a good taste.

### (5) Preparation of a gelled beverage

According to a hot-pack method, a gelled beverage was prepared using, as the raw material, sugar, high fructose corn syrup, apple juice, calcium lactate, thickening polysaccharides, an acidifier and flavor. When mixing the above-mentioned components, an aqueous extract of grape seeds ("Gravinol", product of Kikkoman Corp.) was added to the beverage as a substance effective for inhibiting the proliferation of acidophilic bacteria in such an amount that 0.0037 wt.% of the substance was contained in the beverage, thereby producing an acidic beverage of the present invention (pH 4.0).

The obtained drink had a good taste.

## Claims

1. A process for producing a bacteriostatic acidic beverage comprising incorporating into the acidic beverage 0.00036 to 0.0073 wt.% of a substance effective for inhibiting the proliferation of thermotolerant acidophilic bacteria belonging to the genus *Alicyclobacillus* capable of proliferating in the acidic beverage, the substance being an aqueous extract of grape seeds and/or an aqueous extract of the pomace or the residues of squeezed grapes after separation of the juice.

2. A process according to Claim 1, wherein the acidic beverage has a pH of less than 4.6 and is a fruit juice beverage, a lactic beverage, a vegetable juice, a gelled beverage, flavoured water or a sports drink.

3. An acidic beverage obtainable by the process according to any preceding Claim, in which proliferation of thermotolerant acidophilic bacteria is inhibited.

4. Use of a substance which is an aqueous extract of grape seeds and/or an aqueous extract of the pomace or the residues of squeezed grapes after separation of the juice for inhibiting the proliferation of *Alicyclobacillus* in an acidic beverage, wherein said substance is incorporated into the acidic beverage in an amount of 0.00036 to 0.0073 wt.%.

## Patentansprüche

1. Verfahren zur Herstellung eines bakteriostatischen sauren Getränks, umfassend das Eingliedern von 0,00036 bis 0,0073 Gew.% einer Substanz, die zum Inhibieren der Vermehrung thermotoleranter acidophiler Bakterien, die zur Gattung Alicyclobacillus gehören und in der Lage sind, sich in dem sauren Getränk zu vermehren, wirksam ist, wobei die Substanz ein wässriger Extrakt aus Traubenkernen und/oder ein wässriger Extrakt des Tresters oder der Reste ausgepresster Trauben nach Abtrennung des Saftes ist.

2. Verfahren gemäss Anspruch 1, wobei das saure Getränk einen pH von weniger als 4,6 aufweist und ein Fruchtsaftgetränk, ein Milchgetränk, ein Gemüsesaft, aromatisches Wasser oder ein Sportgetränk ist.

3. Saures Getränk, erhältlich nach dem Verfahren gemäss einem der vorstehenden Ansprüche, in dem die Vermehrung von thermotoleranten acidophilen Bakterien inhibiert ist.

4. Verwendung einer Substanz, die ein wässriger Extrakt aus Traubenkernen und/oder ein wässriger Extrakt der Trester oder der Reste ausgepresster Trauben nach Abtrennung des Saftes ist, zum Inhibieren der Vermehrung von Alicyclobacillus in einem sauren Getränk, wobei die Substanz in einer Menge von 0,00036 bis 0,0073 Gew.% in das saure Getränk eingegliedert wird.

## Revendications

1. Procédé de production d'une boisson acide bactériostatique comprenant l'incorporation dans la boisson acide de 0,00036 à 0,0073 % en poids d'une substance efficace pour inhiber la prolifération de bactéries acidophiles thermotolérantes appartenant au genre *Alicyclobacillus* capables de proliférer dans les boissons acides, la substance étant un extrait aqueux de pépins de raisins et/ou un extrait aqueux du marc ou des résidus de raisins pressés après séparation du jus.

2. Procédé selon la revendication 1, dans lequel la boisson acide a un pH inférieur à 4,6 et est un jus de fruit, une boisson lactée, un jus de légume, une boisson gélifiée, de l'eau aromatisée ou une boisson énergétique.

3. Boisson acide pouvant être obtenue par le procédé selon l'une quelconque des revendications précédentes, dans laquelle toute prolifération de bactéries acidophiles thermotolérantes est inhibée.

4. Utilisation d'une substance qui est un extrait aqueux de pépins de raisins et/ou un extrait aqueux du marc ou des résidus de raisins pressés après séparation du jus pour inhiber la prolifération des bactéries *Alicyclobacillus* dans une boisson acide, ladite substance étant incorporée dans la boisson acide en quantité allant de 0,00036 à 0,0073 % en poids.
